# Europäisches Patentamt
## European Patent Office
## Office européen des brevets

(19)

(11) Veröffentlichungsnummer: **0 109 013 B1**

(12) # EUROPÄISCHE PATENTSCHRIFT

(45) Veröffentlichungstag der Patentschrift:
**16.09.87**

(51) Int. Cl.⁴: **C 03 C 17/00**, B 28 B 11/04, C 04 B 41/00

(21) Anmeldenummer: **83111020.0**

(22) Anmeldetag: **04.11.83**

(54) Vorrichtung zum Beschichten von plattenförmigen Körpern aus glasierter Keramik (Fliesen), Glas oder Emaille.

(30) Priorität: **13.11.82 DE 3242166**

(43) Veröffentlichungstag der Anmeldung:
**23.05.84 Patentblatt 84/21**

(45) Bekanntmachung des Hinweises auf die Patenterteilung:
**16.09.87 Patentblatt 87/38**

(84) Benannte Vertragsstaaten:
**AT BE CH DE FR GB IT LI LU NL SE**

(56) Entgegenhaltungen:
**DE - C - 533 559**
**GB - A - 1 048 735**
**GB - A - 1 113 891**
**US - A - 2 838 023**
**US - A - 3 745 971**

(73) Patentinhaber: **Wartenberg, Erwin W., Dr.,
Brunnenwiesen 6, D-7000 Stuttgart 71 (DE)**

(72) Erfinder: **Wartenberg, Erwin W., Dr., Brunnenwiesen 6,
D-7000 Stuttgart 71 (DE)**

(74) Vertreter: **Hoeger, Stellrecht & Partner,
Uhlandstrasse 14c, D-7000 Stuttgart 1 (DE)**

## Beschreibung

Die Erfindung betrifft eine Vorrichtung zum Beschichten von plattenförmigen Körpern aus glasierter Keramik (Fliesen), Glas oder Emaille mit einem dünnen, festhaftenden Überzug durch Tauchen der Körper in ein Flüssigkeitsbad, in welchem eine den Überzug bildende Substanz gelöst ist.

Es ist bekannt (DE-C-21 08 849), auf Körpern aus glasierter Keramik, Glas oder Emaille einen dünnen, farbigen Lüsterüberzug dadurch aufzubringen, dass man die Oberfläche des Körpers zunächst mit einer dünnen Schicht aus wenigstens einem in mehreren Wertigkeiten existenten Metall und Oxiden dieses Metalls überzieht und hierauf in diesem Überzug durch eine Wärmebehandlung dauerhafte Lüsterfarben hervorruft. Zur Herstellung des Metall/Metalloxid-Überzugs wird der Körper auf eine Temperatur von beispielsweise etwa 500 °C erhitzt und anschliessend in eine erwärmte Flüssigkeit getaucht, die pyrolytisch leicht zersetzliche Metallverbindungen, z. B. Eisenpentakarbonyl in alkoholischer Lösung enthält. Um den eingetauchten Körper herum bildet sich im Flüssigkeitsbad aufgrund des Leidenfrost'schen Phänomens ein Gasmantel, der sowohl Lösungsmittelmoleküle als auch die Moleküle der Metallverbindung enthält. Die Moleküle der Metallverbindung zersetzen sich pyrolytisch an der erhitzten Körperoberfläche, zum Teil unter Einbeziehung der Lösungsmittelmoleküle als Reaktionspartner, und bilden auf der Oberfläche eine gleichmässige, dünne Schicht eines Gemisches aus Metall- und Metalloxidphasen wechselnder Zusammensetzung. Die Schichtdicke liegt in der Grössenordnung der Wellenlänge des Lichtes.

Es wurden Anstrengungen unternommen, eine Vorrichtung zur automatischen Durchführung des Eintauchens und Beschichtens der Körper zu entwickeln, um auf diese Weise das erwähnte Verfahren zum Herstellen von Lüsterüberzügen in industriellem Massstabe durchführen zu können. Dabei ergaben sich zahlreiche Schwierigkeiten. Die aus dem Flüssigkeitsbad sich entwickelnden, brennbaren Dämpfe mussten beherrscht werden, aus den Dämpfen sich entwickelndes Kondensat musste von den Oberflächen der zu beschichtenden Körper ferngehalten werden und zur Herstellung von Körpern mit reproduzierbaren Lüsterfarben musste die Verweilzeit der Körper im Tauchbad präzise eingesteuert werden, da die Schichtdicke, welche die Tönung der Lüsterfarbe zum Teil bestimmt, von der Beschichtungs- und damit der Tauchdauer abhängig ist.

Es ist Aufgabe der Erfindung, eine sicher und genau arbeitende, gewerblich einsetzbare Vorrichtung zum Beschichten von plattenförmigen Körpern mit einem dünnen Überzug durch Tauchen der Körper in ein Flüssigkeitsbad vorzuschlagen, wobei die Tauchzeit genau einstellbar ist. Insbesondere soll sich eine solche Vorrichtung zum Herstellen von Lüsterüberzügen auf Körpern aus glasierter Keramik (Fliesen), Glas oder Emaille eignen.

Die Aufgabe wird erfindungsgemäss durch folgende Merkmale gelöst:

a) eine beheizte Wanne zur Aufnahme der Tauchflüssigkeit;

b) eine die Wanne und das Flüssigkeitsbad gegen die Umgebung abschirmende, mit Ein- und Auslassschlitzen für die plattenförmigen Körper versehene Deckelhaube;

c) eine in der Deckelhaube angeordnete Kühleinrichtung;

d) eine vom Einlass- zum Auslassschlitz auf einer nach unten gekrümmten Bahn durch die Wanne verlaufende Fördereinrichtung;

e) eine der Einstellung der Tauchstrecke dienende Einrichtung zur Absenkung und Anhebung des Flüssigkeitsniveaus in der Wanne.

Aus der DE-C-533 559 ist eine Vorrichtung zum Engobieren von Dachziegeln bekannt, mit einer die Engobe enthaltenden Wanne und einer auf einer nach unten gekrümmten Bahn durch die Wanne verlaufenden Fördereinrichtung. Die Vorrichtung umfasst keine Einrichtung zur Einstellung der Tauchstrecke über die Absenkung und Anhebung des Flüssigkeitsniveaus in der Wanne. Die in dieser Schrift angegebene Niveauregelung dient der Konstanthaltung eines im wesentlichen immer gleichbleibenden Flüssigkeitsniveaus mit Hilfe eines Schwimmers.

Die nachstehende Beschreibung einer bevorzugten Ausführungsform der Erfindung dient im Zusammenhang mit beiliegender Zeichnung der weiteren Erläuterung. Es zeigen:

Fig. 1 eine schematische Seitenansicht einer Vorrichtung zum Beschichten plattenförmiger Körper mit einem Überzug und

Fig. 2 eine Schnittansicht entlang der Linie 2–2 in Fig. 1.

Eine mit einer Metallverkleidung versehene Wanne 1 enthält eine muldenförmige Vertiefung 2 mit an der Ein- und Auslaufseite vorgesehenen Schrägflächen 3 bzw. 4. In der Vertiefung 2 befindet sich eine Tauchflüssigkeit 5, deren Spiegel oder Niveau durch ein kleines Dreieck 6 angedeutet ist. Die Wanne 1 ist durch eine Heizeinrichtung, beispielsweise Heizstäbe 7 aufheizbar, so dass die Flüssigkeit 5 bei einer vorgegebenen Temperatur, z. B. in der Nähe ihres Siedepunktes, gehalten werden kann. (Ein nicht dargestellter) Thermostat hält die Temperatur konstant.

Die Wanne 1 und das in ihr enthaltene Flüssigkeitsbad ist gegen die Umgebung durch eine aufgesetzte Deckelhaube 8 abgeschirmt, so dass aus dem Flüssigkeitsbad stammende Dämpfe sich nicht verbreiten können. Wie dargestellt, steht die Deckelhaube 8 an der Einlass- und Auslassseite E bzw. A der Vorrichtung über die Wanne 1 hinaus. An der Einlassseite E ist eine Fördervorrichtung 9 vorgesehen, z. B. ein Förderband, welches bis unter die dort überstehende Haube 8 reicht. Zwischen Haube 8 und der Oberseite der Fördereinrichtung 9 ist ein schmaler, horizontal verlaufender Einlassschlitz 12 ausgebildet, durch den ein in das Flüssigkeitsbad einzutauchender Körper, nämlich eine an ihrer Oberseite glasierte Fliese 11, in die Vorrichtung eingeführt werden kann. An

der Auslassseite A der Vorrichtung erstreckt sich die Deckelhaube 8 über eine weitere Fördereinrichtung 13, wobei zwischen dieser Fördereinrichtung und der Haube 8 ein schmaler, horizontal verlaufender Auslassschlitz 14 ausgebildet ist, durch den die im Tauchbad mit einem dünnen Überzug versehenen Fliesen 11 die Vorrichtung verlassen können. An den Schlitzen 12, 14 können flexible Verschlussglieder vorgesehen werden, die sich beim Ein- bzw. Auslaufen der Fliese 11 entsprechend verbiegen und bei Abwesenheit von Fliesen die Schlitze weitgehend verschliessen.

Im Innern der Deckelhaube ist eine Kühleinrichtung 15, beispielsweise in Form einer Rohrschlange, vorgesehen, um aus dem Flüssigkeitsbad durch Verdampfung entstandene Gase zu kondensieren. In die als Rohrschlange ausgebildete Kühleinrichtung 15 kann an der Einlaufseite E gekühltes Wasser eingespeist werden, welches sich beim Durchlaufen der Haube 8 erwärmt und an der Auslaufseite A wieder austritt.

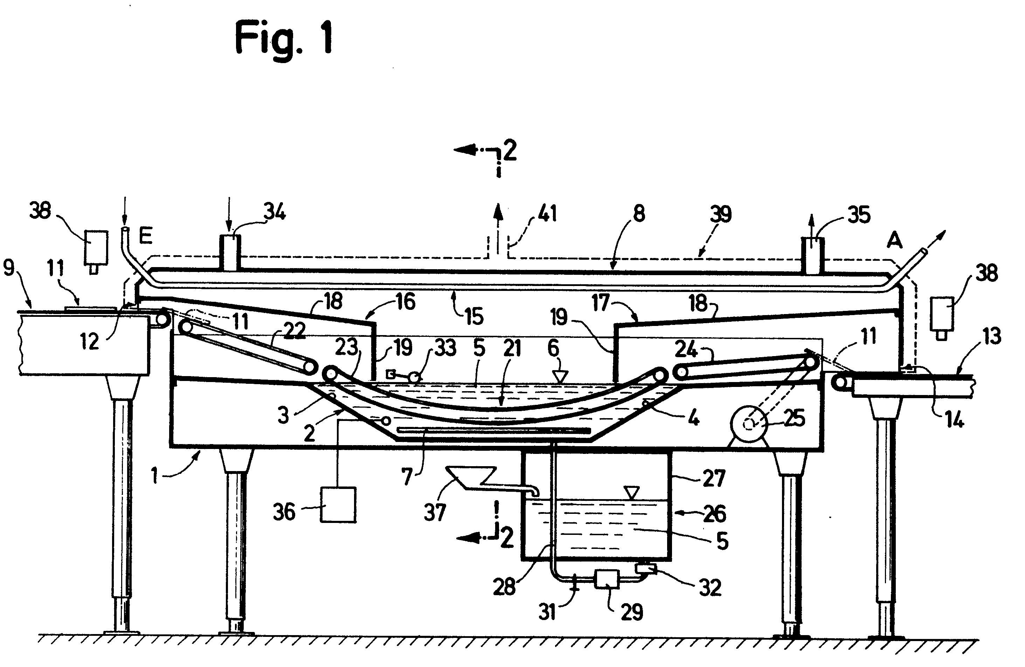

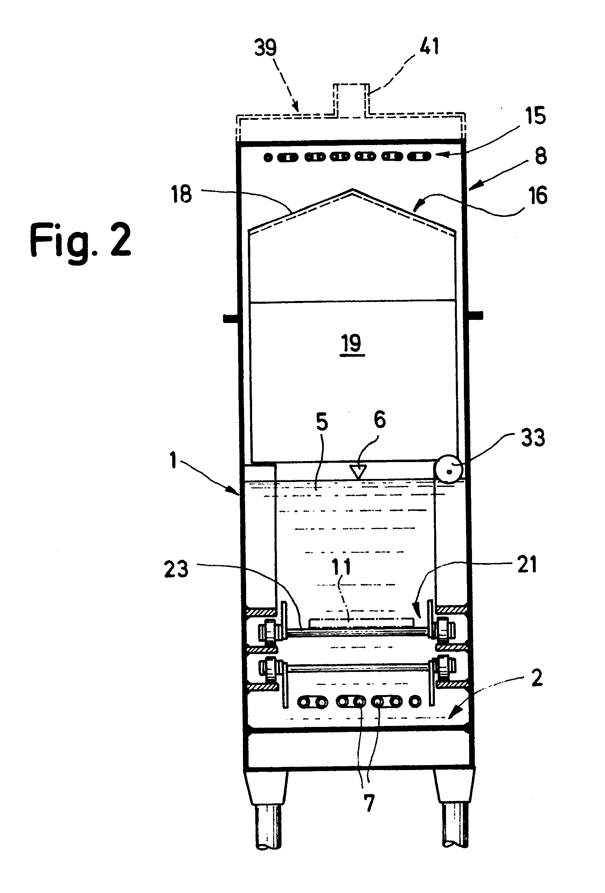

Unterhalb der Kühleinrichtung 15 befinden sich in der Deckelhaube 8 Kondensatabschirmungen 16, 17, welche die aus Fig. 1 und 2 ersichtliche Gestalt haben. In der Längsschnittansicht gemäss Fig. 1 umfassen die Abschirmungen 16, 17 je einen von der Ein- bzw. Auslaufseite der Deckelhaube 8 ausgehende, schräg nach unten bis über die Schrägflächen 3, 4 verlaufende Schenkel 18, an die sich ein jeweils senkrecht gerichteter, knapp bis zum oberen Rand der Mulde 2 reichender Schenkel 19 anschliesst. Die Abschirmeinrichtungen 16, 17 bestehen aus Blech und erstrecken sich im wesentlichen über die gesamte Breite der Vorrichtung. Entsprechend der in Fig. 2 dargestellten Querschnittansicht sind die jeweils von der Ein- und Auslassseite der Vorrichtung ausgehenden Schenkel 18 dachartig geknickt, so dass von der Kühleinrichtung 15 abtropfendes Kondensat seitlich und zur Mulde 2 hin abfliessen kann.

Im Innern der Wanne 1 erstreckt sich von der Ein- bis zur Auslaufseite eine Fördereinrichtung 21, beispielsweise in Gestalt eines Kettenförderers oder eines mit Querstäben, die zu transportierenden Fliesen 11 aufnehmenden Rollenförderers (Fig. 2 unten). Im Bereich der das Flüssigkeitsbad enthaltenden Mulde 2 verläuft die Fördereinrichtung 21 auf einer nach unten gekrümmten Bahn. Die Fördereinrichtung 21 umfasst insgesamt drei hintereinander angeordnete Förderstrecken 22, 23 und 24, von denen die Förderstrecke 22 im wesentlichen die Distanz zwischen Einlassschlitz 12 und Flüssigkeitsoberfläche 6 überbrückt, die Förderstrecke 23 im wesentlichen ausschliesslich in der die Flüssigkeit enthaltenden Mulde 2 verläuft und die Förderstrecke 24 im wesentlichen den Raum zwischen Flüssigkeitsoberfläche 6 und Auslassschlitz 14 überbrückt. Die einzelnen Transportbänder der Förderstrecken 22, 23 und 24 können antriebsmässig aneinander gekuppelt sein und über einen gemeinsamen Antriebsmotor 25 angetrieben werden. Die Transportgeschwindigkeit der Fördereinrichtung ist dabei, z.B. durch entsprechende Ausbildung des Motors 25, innerhalb bestimmter Grenzen veränderlich.

Die Abschirmung 16 überdeckt im wesentlichen die Förderstrecke 22 und verhindert das Abtropfen von Kondensat auf Fliesen, die sich auf dieser Förderstrecke befinden. In entsprechender Weise überdeckt die Abschirmung 17 die Förderstrecke 24. Wie in Fig. 1 dargestellt, ragen die Schenkel 18 der Abschirmungen 16, 17 jeweils so weit nach einwärts, dass sie auch die in Fig. 1 aus dem Flüssigkeitsbad herausragenden Enden der Förderstrecke 23 abschirmen.

Die im Tauchbad mit einem Überzug zu versehenden Fliesen 11 werden nacheinander von der Fördereinrichtung 9 auf die Förderstrecken 22, 23 und 24 und anschliessend auf die Fördereinrichtung 13 übergeben. Im Verlauf der Förderstrecke 23 findet das Eintauchen in das Flüssigkeitsbad statt.

Es wurde gefunden, dass es für die Erzielung eines gleichmässigen Überzuges eine bestimmte, optimale Geschwindigkeit gibt, mit welcher die Fliesen das Tauchbad durchlaufen sollen. Um dennoch die Verweilzeit der Fliesen im Tauchbad, durch die bekanntlich die Dicke des aufgebrachten Überzugs bestimmt ist, einstellbar zu machen, ist erfindungsgemäss eine Einrichtung 26 vorgesehen, mit deren Hilfe das Flüssigkeitsniveau 6 in der Wanne 1 abgesenkt oder angehoben werden kann. Hierdurch lässt sich die Länge der Tauchstrecke im Flüssigkeitsbad verändern und hierdurch die Verweilzeit der Fliesen in der Flüssigkeit 5 entsprechend einstellen. Je niedriger das Flüssigkeitsniveau um so kürzer ist wegen der gekrümmt verlaufenden Bahn der Förderstrecke 23 die Tauchstrecke.

Die Einrichtung 26 umfasst einen unterhalb der Wanne 1 angeordneten Behälter 27, in dem sich ein Vorrat an Tauchflüssigkeit 5 befindet. Der Behälter 27 kann weiterhin auch Heizstäbe entsprechend den Heizstäben 7 enthalten. Vom Boden des Behälters 27 aus führt eine Leitung 28 zum Boden der Mulde 2. Die Leitung 28 enthält eine Pumpe 29 und ein ferngesteuertes Ventil 31. Soll das Niveau 6 der Flüssigkeit 5 in der Mulde 2 abgesenkt werden, so wird das Ventil 31 geöffnet, so dass die Flüssigkeit 5 aus der Mulde 2 in den Behälter 27 zurückströmen kann. Soll umgekehrt das Flüssigkeitsniveau 6 in der Wanne 1 angehoben werden, so wird bei geöffnetem Ventil 31 die Pumpe 29 in Tätigkeit gesetzt. Die Leitung 28 enthält weiterhin ein Filter 32 für ausgefällte Eisenoxide.

Mit Hilfe der Einrichtung 26 lassen sich in der Wanne 1 Tauchzeiten zwischen etwa 2 und 20 Sekunden einstellen.

Es wurde gefunden, dass die Fliesen 11 mit einer bestimmten Mindestgeschwindigkeit durch die Vorrichtung hindurch gefördert werden müssen, um den Gasraum vor und hinter dem Flüssigkeitsbad möglichst rasch zu durchlaufen. Bei zu langsamer Transportgeschwindigkeit können sich unvermeidliche Dampfreste auf den Fliesen kondensieren, was zu einem ungleichmässigen Überzug führt. Andererseits darf eine maximale Transportgeschwindigkeit der Fliesen 11 nicht überschritten werden, da die Fliesen sonst beim Eintreten in die Flüssigkeit 5 in dieser aufschwimmen und sich von der Fördereinrichtung 21 abheben.

Die Unterteilung der Fördereinrichtung 21 in die drei Förderstrecken 22, 23 und 24 hat den weiteren Vorteil, dass zwischen den Förderstrecken 22 und 24 einerseits und der Förderstrecke 23 keine Wärme und Flüssigkeit ausgetauscht wird. Somit bleiben die Förderstrecken 22, 24 im wesentlichen immer trocken und der Wärmeverlust an der Strecke 23 ist minimal gehalten. Ein Austragen der Flüssigkeit bis zu den Ein- bzw. Ausgangsschlitzen 12 und 14 wird durch diese Anordnung wirksam verhindert.

Dem Tauchbad in der Wanne 1 ist vorzugsweise ein (in Fig. 1 lediglich schematisch angedeuteter) Flüssigkeitsstandanzeiger 33, z.B. in Gestalt eines Schwimmers, zugeordnet. Der Flüssigkeitsstandanzeiger kann zur Fernsteuerung der Pumpe 29 und des Ventils 31 ausgenutzt werden, um auf diese Weise ein bestimmtes Flüssigkeitsniveau im Tauchbad konstant zu halten.

Bei bestimmten Ausführungsformen der Erfindung kann es vorteilhaft sein, in der Deckelhaube 8 und über dem Tauchbad eine Schutzgasatmosphäre aufrecht zu erhalten. Zu diesem Zwecke weist die Deckelhaube 8 Ein- und Auslassöffnungen 34 bzw. 35 für ein solches Schutzgas, beispielsweise Stickstoff, auf.

Für die Erzielung gleichmässig dicker Überzüge auf den Fliesen 11 ist es wichtig, die Konzentration der Überzugssubstanz in der Flüssigkeit 5 konstant zu halten. Um diese Konzentration zu messen und anzuzeigen, ist eine an sich bekannte Infrarot-spektrometrische Messvorrichtung 36 vorgesehen, deren Sensor sich im Innern des Flüssigkeitsbades befindet. Am Vorratsbehälter 27 ist eine (in Fig. 1 nur schematisch angedeutete) Dosiereinrichtung 37 angeordnet, die es gestattet, Überzugssubstanz, beispielsweise in konzentrierter, flüssiger Lösung, nachzudosieren. Hierzu ist die Messvorrichtung 36 mit der Dosiereinrichtung 37 verbunden, so dass die Nachdosierung und Konstanthaltung der Konzentration automatisch erfolgt.

An der Ein- und Auslaufseite E bzw. A der Vorrichtung sind Infrarot-Sensoren 38 angeordnet, mit denen die Temperatur der ein- und auslaufenden Fliesen 11 kontrolliert wird.

Schliesslich kann, wie in Fig. 1 bei 39 gestrichelt dargestellt, die Deckelhaube 8 auch doppelwandig ausgebildet sein. Der von der doppelten Wand eingeschlossene Raum ist überall abgeschlossen und weist lediglich im Bereich der Einlass- und Auslassschlitze 12 bzw. 14 Öffnungen auf, die als Absaugstellen für an den Schlitzen 12, 14 austretende Dämpfe oder Gase dienen. Der von der doppelten Wand eingeschlossene Raum ist über einen Rohrstutzen 41 mit einer Saugquelle, z.B. einer Saugpumpe, verbunden. Auf diese Weise wird das Austreten schädlicher und gefährlicher Gase oder Dämpfe aus der Vorrichtung in die Umgebung verhindert.

Bei der Herstellung von farbigen Lüsterüberzügen kann die Wanne 1 als Tauchbad eine siedende, einprozentige Lösung von Eisenpentakarbonyl in Butanol enthalten. Die Fliesen 11 sind vor Eintritt in die Vorrichtung auf eine Temperatur von beispielsweise 500 °C aufgeheizt.

**Patentansprüche**

1. Vorrichtung zum Beschichten von plattenförmigen Körpern aus glasierter Keramik (Fliesen), Glas oder Emaille mit einem dünnen, festhaftenden Überzug durch Tauchen der Körper in ein Flüssigkeitsbad, in welchem eine den Überzug bildende Substanz gelöst ist, gekennzeichnet durch folgende Merkmale:

a) eine beheizte Wanne (1) zur Aufnahme der Tauchflüssigkeit (5);

b) eine die Wanne und das Flüssigkeitsbad gegen die Umgebung abschirmende, mit Ein- und Auslassschlitzen (12, 14) für die plattenförmigen Körper (11) versehene Deckelhaube (8);

c) eine in der Deckelhaube angeordnete Kühleinrichtung (15);

d) eine vom Einlass- zum Auslassschlitz auf einer nach unten gekrümmten Bahn durch die Wanne verlaufende Fördereinrichtung (21);

e) eine der Einstellung der Tauchstrecke dienende Einrichtung (26) zur Absenkung und Anhebung des Flüssigkeitsniveaus (6) in der Wanne.

2. Vorrichtung nach Anspruch 1, gekennzeichnet durch eine Kondensat-Abschirmung (16, 17) in der Deckelhaube (8).

3. Vorrichtung nach Anspruch 1 oder 2, dadurch gekennzeichnet, dass die Transportgeschwindigkeit der Fördereinrichtung (21) innerhalb bestimmter Grenzen veränderlich ist.

4. Vorrichtung nach Anspruch 1, 2 oder 3, dadurch gekennzeichnet, dass die Fördereinrichtung (21) drei hintereinander angeordnete Förderstrecken (22, 23, 24) umfasst, von denen die erste im wesentlichen den Raum zwischen Einlassschlitz (12) und Flüssigkeitsoberfläche (6) überbrückt, die zweite im wesentlichen ausschliesslich in der die Flüssigkeit (5) enthaltenden Wanne (1) verläuft, und die dritte im wesentlichen den Raum zwischen Flüssigkeitsoberfläche und Auslassschlitz (14) überbrückt.

5. Vorrichtung nach einem der Ansprüche 1 bis 4, dadurch gekennzeichnet, dass die Deckelhaube (8) doppelwandig mit Absaugstellen an dem Einlass- und Auslassschlitz (12 bzw. 14) ausgebildet und mit einer Saugquelle verbunden ist.

6. Vorrichtung nach einem der voranstehenden Ansprüche, dadurch gekennzeichnet, dass die der Einstellung der Tauchstrecke dienende Einrichtung (26) folgende Elemente umfasst: einen Vorratsbehälter (27) für die Tauchflüssigkeit (5), eine Pumpe (29) zur Überführung der Tauchflüssigkeit vom Vorratsbehälter in die Wanne (1) und ein Ventil (31) zum Ablassen der Flüssigkeit aus der Wanne in das Vorratsgefäss.

7. Vorrichtung nach Anspruch 6, gekennzeichnet durch einen Flüssigkeitsstandanzeiger (33) mit Fernsteuerung von Pumpe (29) und/oder Ventil (31).

8. Vorrichtung nach einem der voranstehenden Ansprüche, gekennzeichnet durch eine Infrarot-spektrometrische Messvorrichtung (36) für die Konzentration der Überzugssubstanz im Tauchbad sowie durch eine von der Messvorrichtung betätigte Dosiereinrichtung (37) zum Nachdosieren von Überzugssubstanz.

9. Vorrichtung nach einem der voranstehenden Ansprüche, dadurch gekennzeichnet, dass am Ein- und Auslassschlitz (12 bzw. 14) Infrarot-Sensoren (38) zur Temperaturmessung der ein- und austretenden Körper (11) angeordnet sind.

10. Vorrichtung nach einem der voranstehenden Ansprüche, dadurch gekennzeichnet, dass die Deckelhaube (8) Ein- und Auslassöffnungen (34, 35) für ein Schutzgas aufweist.

**Claims**

1. A device for treating laminated bodies made of vitreous ceramics (tiles), glass or enamel with a thin, highly adhesive coating by immersing the bodies in a liquid bath, in which a substance forming the coating is dissolved, characterised by the following features:

a) a heated tank (1) for receiving the immersing liquid (5);

b) a lid (8) which is provided with inlet and outlet slots (12, 14) for the laminated bodies (11) and which protects the tank and the liquid bath from the surroundings;

c) a cooling unit (15) disposed in the lid;

d) a conveyor device extending through the tank from the inlet slot to the outlet slot on a concave track (21);

e) a device (26) for adjusting the immersion depth to decrease or increase the liquid level (6) in the tank.

2. A device according to claim 1, characterised by a condensate screen (16, 17) in the lid (8).

3. A device according to claim 1 or 2, characterised in that the transport speed of the conveyor device (21) can be altered within set limits.

4. A device according to claim 1, 2 or 3, characterised in that the conveyor device (21) contains three conveyor sections (22, 23, 24) arranged one behind the other, the first of which substantially bridges the space between the inlet slot (12) and the liquid surface (6), the second substantially extends only in the tank (1) containing the liquid (5), and the third substantially bridges the space between the liquid surface and the outlet slot (14).

5. A device according to any one of claims 1 to 4, characterised in that the lid (8) is designed to have two walls with suction points on the inlet and outlet slot (12 or 14) and is connected to a suction source.

6. A device according to any one of the preceding claims, characterised in that the device (26) for adjusting the immersion depth contains the following elements: a supply container (27) for the immersion liquid (5), a pump (29) for transferring the immersion liquid (5) from the supply container to the tank (1) and a valve (31) for discharging the liquid from the tank into the supply vessel.

7. A device according to claim 6, characterised by a liquid level indicator (33) with remote control of the pump and/or valve (31).

8. A device according to any one of the preceding claims, characterised by an infra-red spectrometric measuring device (36) for the concentration of the coating substance in the immersion bath and a metering device (37) actuated by the measuring device for subsequent metering of the coating substance.

9. A device according to any one of the preceding claims, characterised in that infra-red sensors (38) for measuring the temperature of the bodies (11) entering and leaving are arranged on the inlet and outlet slots (12 or 14).

10. A device according to any one of the preceding claims, characterised in that the lid (8) has inlet and outlet openings (34, 35) for a buffer gas.

**Revendications**

1. Installation pour revêtir des corps en forme de plaques, en céramique vitrifiée (carreau), en verre ou en émail, d'un revêtement mince et adhérent, par trempé des corps dans un bain liquide dans lequel est dissoute une substance qui forme le revêtement, installation caractérisée par les attributs suivants:

a) une cuve chauffée (1) pour recevoir le liquide de trempé (5);

b) un capot de couverture (8) formant écran pour la cuve et le bain de liquide à l'égard de l'environnement et muni de fentes d'entrée et de sortie (12, 14) pour les corps en forme de plaques (11);

c) un dispositif de refroidissement (15) disposé dans le capot de couverture;

d) un dispositif de transport (21) qui va à travers la cuve de la fente d'entrée à la fente de sortie, sur une voie en voûte vers le bas;

e) un dispositif (26) prévu pour abaisser et relever le niveau du liquide (6) dans la cuve et servant au réglage de la longueur de trempé.

2. Installation selon la revendication 1, caractérisée par un écran anticondensats (16, 17) dans le capot de couverture (8).

3. Installation selon la revendication 1 ou 2, caractérisée en ce que la vitesse de transport du dispositif de transport (21) peut varier à l'intérieur de limites déterminées.

4. Installation selon la revendication 1, 2 ou 3, caractérisée en ce que le dispositif de transport (21) comporte 3 longueurs de transport (22, 23, 24) disposées l'une derrière l'autre, dont la première franchit essentiellement l'espace situé entre la fente d'entrée (12) et la surface du liquide (6), la seconde passe essentiellement et exclusivement dans la cuve (1) qui contient le liquide (5) et la troisième franchit essentiellement l'espace situé entre la surface du liquide et la fente de sortie (14).

5. Installation selon l'une des revendications 1 à 4, caractérisée en ce que le capot de couverture (8) est conçu à double paroi avec des positions d'aspiration à la fente d'entrée et à la fente de sortie (12 ou 14) et qu'il est relié à une source de vide.

6. Installation selon l'une des revendications précédentes, caractérisée en ce que le dispositif (26) qui sert à régler la longueur de trempé comprend les éléments suivants: un réservoir de stockage (27) pour le liquide de trempé (5), une pompe (29) pour faire passer le liquide de trempé depuis le réservoir de transport dans la cuve (1) et un robinet (31) pour laisser s'écouler le liquide en dehors de la cuve, dans le récipient de stockage.

7. Installation selon la revendication 6, caractérisée par un indicateur de niveau du liquide (33) avec télécommande de la pompe (29) et/ou du robinet (31).

8. Installation selon l'une des revendications précédentes, caractérisée par un mécanisme de mesure spectrométrique par infrarouge (36) pour mesurer la concentration de la substance de revêtement dans le bain de trempé, ainsi que par un dispositif de dosage (37) activé par le mécanisme de mesure pour compléter le dosage de la substance de revêtement.

9. Installation selon l'une des revendications précédentes, caractérisée en ce qu'à la fente d'entrée et à la fente de sortie (12 ou 14) sont disposés les détecteurs à infrarouges (36) pour la mesure de la température des corps (11) qui entrent et sortent.

10. Installation selon une des revendications précédentes, caractérisée en ce que le capot de couverture (8) présente des ouvertures d'entrée et de sortie (34, 35) pour un gaz de protection.

# Fig. 1

# Fig. 2